# FASCICULE DE BREVET EUROPEEN

(11) **EP 0 910 269 B1**
(45) Date de publication et mention de la délivrance du brevet: **23.10.2002**
(21) Numéro de dépôt: 97928345.4
(22) Date de dépôt: 13.06.1997
(51) Int. Cl.: A47J 36/38, A47J 37/12

(54) **DISPOSITIF DE CONDENSATION DE VAPEURS DE CUISSON ET APPAREIL DE CUISSON COMPORTANT UN TEL DISPOSITIF**
KONDENSIERVORRICHTUNG FÜR KOCHDÄMPFE UND KOCHGERÄT MIT EINER SOLCHEN VORRICHTUNG
DEVICE FOR CONDENSING COOKING STEAMS AND COOKING APPARATUS COMPRISING SAME

(30) Priorité: 21.06.1996 FR 9607725
(43) Date de publication de la demande: 28.04.1999
(73) Titulaire: SEB S.A., 69130 Ecully (FR)
(72) Inventeur: BOUFFAY, Alain, F-14200 Hérouville Saint Clair (FR); COLLAS, Guy, F-14123 Ifs (FR)
(74) Mandataire: Kiehl, Hubert
(86) Numéro de dépôt international: FR9701058
(87) Numéro de publication internationale: WO97049320

(56) Documents cités:
- EP-A- 0 095 797
- WO-A-91/04698
- WO-A-94/23626
- DE-U- 8 502 304
- FR-A- 2 180 637
- FR-A- 2 657 765

## Description

La présente invention se rapporte d'une manière générale aux appareils de cuisson, tels que par exemple des friteuses à usage ménager, comprenant une cuve de cuisson destinée à être fermée par un couvercle pendant la phase de cuisson, et concerne plus particulièrement un dispositif pour condenser les vapeurs provenant de la cuve d'un tel appareil de cuisson, ce dispositif comprenant un réceptacle contenant un agent réfrigérant et dans lequel est disposé un conduit faisant office de canal condenseur comportant une entrée d'amenée des vapeurs à condenser qui traverse le réceptacle et qui est reliée à la cuve de l'appareil de cuisson, et une sortie débouchant du réceptacle et par laquelle s'écoule l'eau de condensation produite par passage des vapeurs dans le conduit refroidi par l'agent réfrigérant.

On sait que pour de tels appareils de cuisson, la présence d'un dispositif de condensation est particulièrement utile pour éliminer les vapeurs contenant les substances odorantes inopportunes émises au cours de la cuisson.

Dans un dispositif de condensation connu du genre indiqué ci-dessus, du type à échange de chaleur, le réceptacle est constitué par un réservoir d'eau froide disposé extérieurement sur le côté latéral de l'appareil de cuisson, et le canal condenseur est formé par un tuyau hélicoïdal placé en position verticale dans le réservoir et qui présente une entrée passant par une ouverture pratiquée dans la paroi supérieure du réservoir en étant reliée par une tubulure à la cuve de l'appareil, et une sortie traversant de manière étanche le fond du réservoir. Ainsi, lors de la cuisson, les vapeurs contenant les substances odorantes inopportunes s'écoulent et se condensent dans le tuyau refroidi par l'eau, le condensat étant recueilli dans un bac collecteur placé en dessous du réservoir. Toutefois, dans ce dispositif de condensation, la paroi supérieure du réservoir est constituée en fait par un couvercle qui doit être ouvert afin de permettre l'introduction du tuyau hélicoïdal dans le réservoir, ce qui complique d'autant la réalisation du réservoir. Par ailleurs, le montage du tuyau hélicoïdal dans le réservoir est difficile à effectuer, en particulier au niveau de l'engagement étanche de sa sortie à travers le fond du réservoir, d'où un dispositif de condensation compliqué à fabriquer, et partant, onéreux.

Un autre dispositif est connu de WO-A-94 23626.

L'invention a notamment pour but de remédier à ces inconvénients et de proposer un dispositif pour condenser des vapeurs provenant d'un appareil de cuisson, du type exposé ci-dessus, qui soit d'une réalisation simple et peu coûteuse, et assure un échange de chaleur et une condensation efficaces.

Selon l'invention, le réceptacle est conformé en une cassette étanche réalisée d'une seule pièce en une matière plastique enveloppant le conduit en laissant libres l'entrée et la sortie de ce dernier, ladite cassette comportant un orifice de remplissage d'agent réfrigérant destiné à être fermé de façon hermétique par un organe d'obturation.

Ainsi, le fait de réaliser en une seule pièce, autour du conduit, le réceptacle sous la forme d'une cassette étanche, permet désormais de s'affranchir de toute opération de montage du conduit, contrairement à l'art antérieur, simplifiant ainsi notablement la fabrication du dispositif de condensation. De plus, cette réalisation de la cassette étanche enveloppant le conduit permet de se dispenser de tout joint d'étanchéité au niveau du passage de l'entrée et de la sortie du conduit à travers la cassette, conduisant ainsi à réduire le coût de fabrication du dispositif de condensation.

Selon un mode d'exécution préféré, la cassette est formée par soufflage.

Selon le mode d'exécution préféré, le conduit est conformé en un serpentin réalisé par soufflage d'une matière plastique.

L'invention vise également un appareil de cuisson, tel que par exemple une friteuse, comportant un boîtier ouvert destiné à être fermé par un couvercle pendant la phase de cuisson et qui est pourvu à sa base d'un socle, une cuve de cuisson placée dans le boîtier, et un bac ouvert en sa région postérieure, monté escamotable dans le socle du boîtier et qui contient au moins un dispositif de condensation des vapeurs de cuisson selon l'invention.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'un appareil de cuisson électrique, tel qu'une friteuse, comportant deux dispositifs de condensation selon l'invention ;
- la figure 2 est une vue schématique en perspective, à échelle agrandie, d'un bac de l'appareil de cuisson de la figure 1, dans lequel sont placés les deux dispositifs de condensation ;
- la figure 3 est une vue en perspective, à échelle agrandie, d'un dispositif de condensation ;
- la figure 4 est une vue en coupe longitudinale du dispositif de condensation illustré à la figure 3 ; et
- la figure 5 est une vue en coupe selon la ligne V-V de la figure 4.

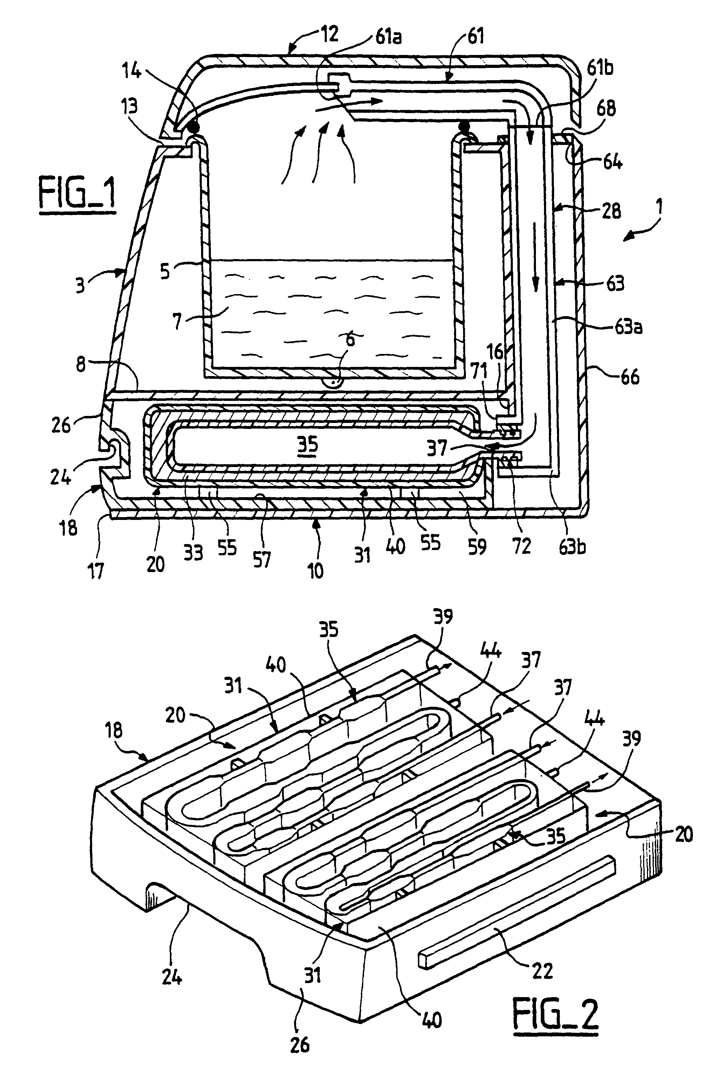

L'appareil de cuisson 1 représenté schématiquement à la figure 1 est une friteuse électrique ménagère qui comprend un boîtier ou récipient ouvert 3, de forme générale sensiblement parallélépipédique, dans lequel est placée une cuve métallique 5 destinée à être chauffée par des moyens de chauffage électrique, tels qu'une résistance blindée 6, et contenant un bain de friture 7. Le boîtier 3 est supporté à sa base 8 par un socle 10, de forme également sensiblement parallélépipédique et réalisé, de préférence, d'une seule pièce avec le boîtier, et est destiné à être fermé, pendant la friture, par un couvercle 12 monté articulé de façon amovible sur un bord supérieur 13 du boîtier grâce à un moyen d'articulation démontable (non figuré).

Le couvercle 12 comporte sur sa face interne un joint 14 conformé de manière à réaliser l'étanchéité entre la cuve 5 et le couvercle 12 lorsque ce dernier est fermé, comme montré à la figure 1.

Le boîtier 3, le socle 10 et le couvercle 12 sont moulés en une matière plastique telle que, par exemple, le polypropylène qui est particulièrement économique et d'un entretien facile.

Dans le socle 10 du boîtier 3 est pratiqué un logement 16 qui s'ouvre en face frontale 17 du socle et dans lequel est monté escamotable un bac ou réceptacle 18, mieux visible à la figure 2, de forme parallélépipédique, ouvert en sa région postérieure et en sa région supérieure, et contenant au moins un dispositif de condensation de vapeur, au nombre de deux dans l'exemple de réalisation illustré à la figure 2, désigné par la même référence globale 20 sur les figures 1, 2 et 3.

Dans cet exemple, figures 1 et 2, le bac 18 est conformé en un tiroir qui, d'une part, est monté coulissant horizontalement dans le logement 16 du socle 10 par deux rails horizontaux 22, dont un seul est visible sur la figure 2, s'engageant dans deux glissières correspondantes (non figurées) ménagées respectivement sur les deux parois latérales du logement 16, et d'autre part, est amovible. Sur les figures 1 et 2, on a représenté en 24 une large échancrure pratiquée dans la face antérieure 26 du bac 18 et formant un organe de préhension destiné au retrait du bac.

La friteuse 1, figure 1, comprend également des moyens de conduite ou de liaison 28 établissant une communication entre le volume supérieur de la cuve 5 et chacun des deux dispositifs de condensation 20 placés dans le bac 18 (figure 2), et permettant l'écoulement des vapeurs.

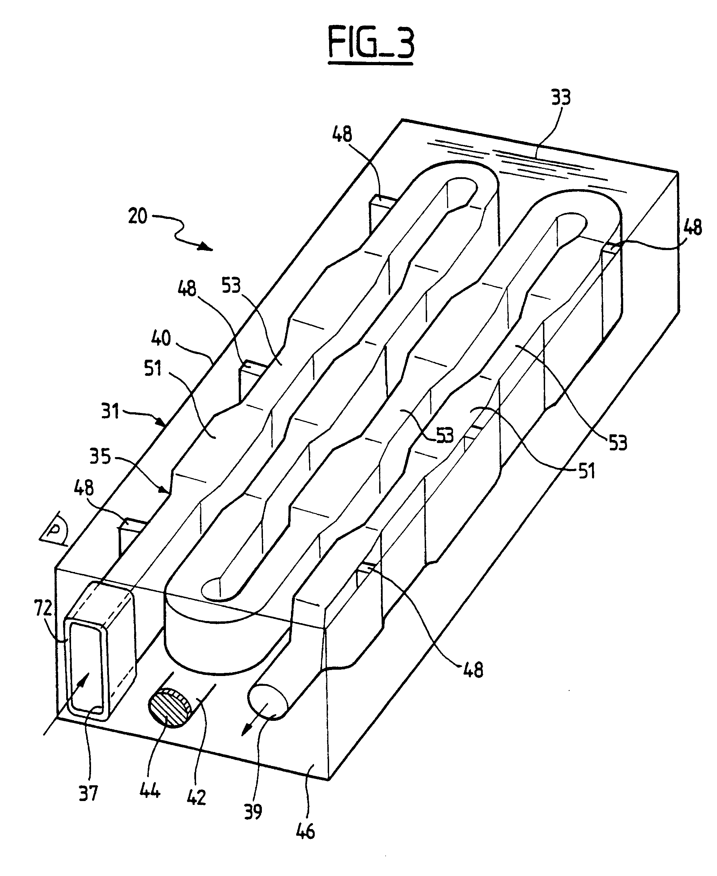

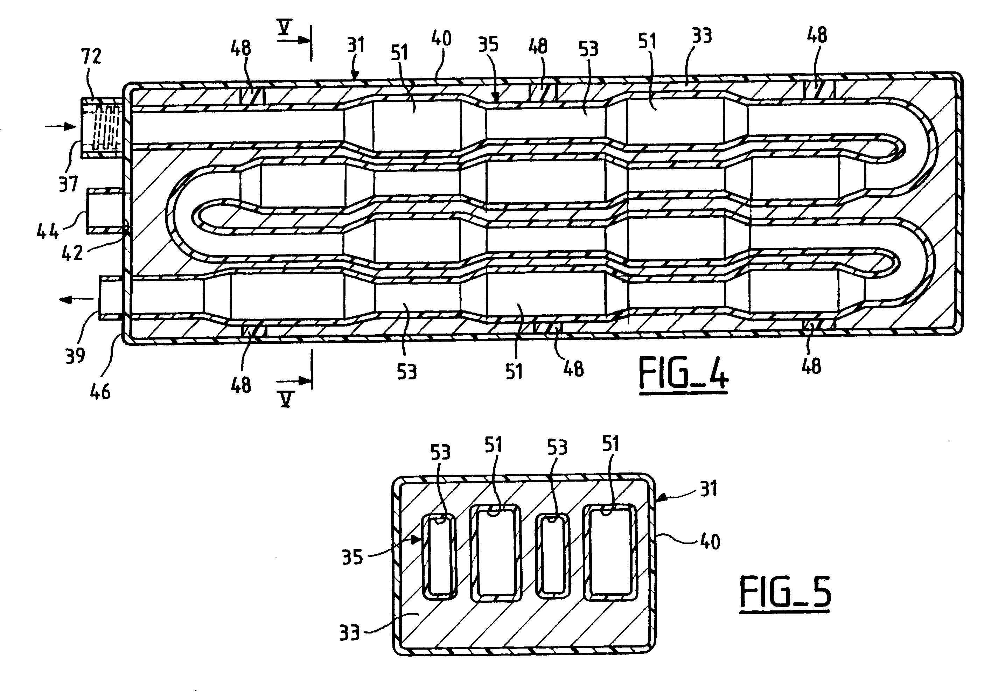

Comme le montrent les figures 3 et 4, chaque dispositif de condensation 20 comprend un réceptacle 31 contenant un agent réfrigérant 33 (figure 4) constitué présentement par de l'eau congelée, éventuellement colorée par un colorant non toxique, et un conduit 35 disposé dans le réceptacle 31 et faisant office de canal condenseur. Le conduit 35 comporte une entrée 37 d'amenée des vapeurs à condenser qui fait saillie hors du réceptacle 31, et une sortie 39 débouchant du réceptacle 31 et par laquelle est destinée à s'écouler l'eau de condensation produite par le passage des vapeurs dans le conduit 35 refroidi par la glace.

Selon l'invention, le réceptacle 31 est conformé en une cassette étanche 40 réalisée d'une seule pièce en une matière plastique enveloppant le conduit 35 en laissant libres l'entrée 37 et la sortie 39 de ce dernier, la cassette 40 comportant un orifice 42 (figure 4) de remplissage d'eau destiné à être fermé de façon hermétique par un organe d'obturation, tel que par exemple un bouchon 44.

La cassette 40 est, de préférence, réalisée en une matière plastique transparente telle que, par exemple, le polypropylène, et est formée soit par soufflage, soit par moulage autour du conduit 35. Il convient de souligner que le processus de soufflage présente l'avantage d'être particulièrement économique.

Dans l'exemple de réalisation illustré aux figures 3 et 4, la cassette 40 présente une forme parallélépipédique et le conduit 35 est conformé en un serpentin qui s'étend à plat dans un plan parallèle au plan longitudinal P de la cassette et qui est réalisé soit par soufflage, soit par moulage d'une matière plastique telle que, par exemple, le polypropylène. Comme on le voit aux figures 3 et 4, l'entrée 37 et la sortie 39 du conduit 35 font saillie axialement de la même face latérale 46 de la cassette 40 ; l'orifice 42 de remplissage d'eau est pratiqué également sur cette face latérale 46 de la cassette, voir figure 4.

Sur les figures 3 et 4, on a représenté en 48 de petites entretoises en matière plastique qui relient le conduit en serpentin 35 aux deux faces longitudinales de la cassette 40 de manière à maintenir correctement en place le conduit, et qui sont formées de façon appropriée lors du soufflage de la cassette 40 autour du conduit 35.

Dans cet exemple de réalisation, figures 3 et 4, le conduit en serpentin 35 présente une section droite de forme approximativement rectangulaire, comme illustré à la figure 5, et comporte avantageusement, en alternance sur toute sa longueur, des tronçons 51 de même section donnée et des tronçons 53 également de même section mais plus petite que celle des tronçons 51. Ces tronçons 53 définissent ainsi des rétrécissements et sont destinés à ralentir la vitesse de passage des vapeurs dans le conduit 35 afin d'augmenter le temps d'échange thermique avec la glace 33, et partant, d'optimiser la condensation des vapeurs.

Après réalisation sous la forme d'un ensemble unitaire de la cassette 40 munie du conduit interne 35, de l'eau est versée dans la cassette 40 par l'orifice de remplissage 42 qui est ensuite fermé hermétiquement par le bouchon 44. Cet ensemble est alors entreposé dans le freezer d'un réfrigérateur avant utilisation, de manière à permettre la congélation de l'eau qu'il contient.

On notera qu'une soupape de sécurité, connue en soi, peut être agencée au niveau de l'orifice de remplissage 42.

En regard de la figure 2, les deux cassettes réfrigérantes 40 à conduit interne 35 sont montées amovibles dans le bac 18 et s'étendent dans le même sens longitudinal, parallèlement l'une à l'autre. L'une des deux cassettes 40 est montée retournée par rapport à l'autre cassette de manière à mettre l'une à côté de l'autre les deux entrées d'amenée de vapeur 37, comme illustré à la figure 2.

Les deux cassettes réfrigérantes 40 à conduit interne 35 reposent sur des traverses 55 (figure 1) surmontant la paroi de fond 57 du bac 18 de façon à créer une zone inférieure 59 destinée à collecter le condensat s'écoulant par la sortie 39 de chaque conduit 35. De préférence, les deux cassettes 40 sont légèrement inclinées, respectivement, vers les deux faces longitudinales du bac 18 de manière à faciliter l'écoulement du condensat par la sortie 39 de chaque conduit interne 35.

Comme le montre la figure 1, les moyens 28 de conduite des vapeurs de cuisson entre la cuve 5 et chacun des deux dispositifs de condensation 20 montés dans le bac 18, comportent un premier conduit 61 qui est intégré dans le couvercle 12 du boîtier 3 et dont une extrémité 61a débouche dans le volume supérieur de la cuve 5, et un deuxième conduit 63 qui s'étend verticalement dans une ouverture traversante 64 pratiquée dans le boîtier 3, à partir de la bordure supérieure 13 de sa face arrière 66 ; le conduit 63 porte un joint 68 destiné à assurer l'étanchéité au niveau de l'ouverture 64. Le conduit 63 présente une section en L dont la branche verticale 63a traverse l'ouverture 64 et est liée de manière étanche à l'autre extrémité 61b du conduit 61, et dont la branche horizontale 63b est fermée et comporte deux ouvertures 71 qui débouchent dans la région postérieure du bac 18. Sur chaque ouverture 71 de la branche horizontale 63b du conduit 63 est raccordée de manière étanche l'entrée 37 du conduit interne 35 de chacune des deux cassettes réfrigérantes 40, laquelle entrée 37 du conduit 35 est munie d'un manchon formant joint d'étanchéité 72, comme visible aux figures 3 et 4.

En se référant aux figures 1 et 2, l'évacuation et l'élimination des vapeurs présentes dans la friteuse s'effectuent de la manière suivante.

Au cours de la friture, les vapeurs (symbolisées par les flèches) qui se dégagent et qui contiennent les substances odorantes inopportunes, s'échappent par le conduit 61, s'écoulent vers le bas dans le conduit 63 et pénètrent, via chacune des deux ouvertures d'admission 71, dans l'entrée correspondante 37 du conduit en serpentin 35 de chacune des deux cassettes réfrigérantes 40. Elles circulent alors dans chaque conduit 35 en étant ralenties dans les tronçons rétrécis 53 de celui-ci, et se condensent dans le conduit 35 qui est refroidi par l'eau congelée 33 ; l'eau de condensation contenant les odorants inopportuns s'écoule par la sortie 39 de chaque conduit 35 et tombe dans la zone collectrice 59 du bac 18.

## Revendications

1. Dispositif pour condenser des vapeurs provenant d'une cuve (5) d'un appareil de cuisson muni d'un couvercle (12) qui est fermé pendant la phase de cuisson, ce dispositif comprenant un réceptacle (31) contenant un agent réfrigérant (33) et dans lequel est disposé un conduit faisant office de canal condenseur (35) comportant une entrée (37) d'amenée des vapeurs à condenser qui traverse le réceptacle (31) et qui est reliée à la cuve (5) de l'appareil de cuisson, et une sortie (39) débouchant du réceptacle (31) et par laquelle s'écoule l'eau de condensation produite par passage des vapeurs dans ledit conduit refroidi par l'agent réfrigérant,
**caractérisé en ce que** le réceptacle (31) est conformé en une cassette étanche (40) réalisée d'une seule pièce en une matière plastique enveloppant le conduit (35) en laissant libres l'entrée (37) et la sortie (39) de ce dernier, ladite cassette (40) comportant un orifice (42) de remplissage d'agent réfrigérant destiné à être fermé de façon hermétique par un organe d'obturation (44).

2. Dispositif selon la revendication 1,
**caractérisé en ce que** la cassette (40) est formée par soufflage.

3. Dispositif selon la revendication 1,
**caractérisé en ce que** la cassette (40) est formée par moulage.

4. Dispositif selon l'une des revendications 1 à 3,
**caractérisé en ce que** le conduit (35) est conformé en un serpentin réalisé par soufflage d'une matière plastique.

5. Dispositif selon l'une des revendications 1 à 3,
**caractérisé en ce que** le conduit (35) est conformé en un serpentin réalisé par moulage d'une matière plastique.

6. Dispositif selon la revendication 4 ou 5,
**caractérisé en ce que** la matière plastique du conduit (35) est du polypropylène.

7. Dispositif selon l'une quelconque des revendications précédentes,
**caractérisé en ce que** le conduit (35) présente, en alternance sur toute sa longueur, des premiers tronçons (51) de même section donnée et des seconds tronçons (53) de même section mais plus petite que celle des premiers tronçons, ces seconds tronçons (53) définissant des rétrécissements destinés à ralentir la vitesse de passage des vapeurs dans le conduit (35).

8. Dispositif selon l'une des revendications 4 à 7,
**caractérisé en ce que** la cassette (40) présente une forme parallélépipédique et le conduit en serpentin (35) s'étend dans un plan parallèle au plan longitudinal (P) de la cassette (40).

9. Dispositif selon la revendication 8,
**caractérisé en ce que** l'entrée (37) et la sortie (39) du conduit en serpentin (35) font saillie d'une même face transversale (46) de la cassette parallélépipédique (40).

10. Appareil de cuisson, tel que par exemple une friteuse, comportant un boîtier ouvert (3) destiné à être fermé par un couvercle (12) pendant la phase de cuisson et qui est pourvu à sa base d'un socle (10), une cuve de cuisson (5) placée dans le boîtier (3), et un bac (18) ouvert en sa région postérieure et monté escamotable dans le socle (10) du boîtier,
**caractérisé en ce que** le bac (18) contient au moins un dispositif (20) de condensation des vapeurs de cuisson tel que défini selon l'une quelconque des revendications précédentes.

## Claims

1. Device for condensing vapours coming from the vessel (5) of a cooking apparatus provided with a cover (12) which is closed during the cooking phase, this device comprising a receptacle (31) containing a refrigerating agent (33) and in which there is disposed a conduit serving as a condensing channel (35) having an inlet (37) for bringing the vapours to be condensed which passes through the receptacle (31) and which is connected to the vessel (5) of the cooking apparatus, and an outlet (39) opening out from the receptacle (31) and through which there flows the condensation water produced by the passage of the vapours through the said conduit cooled by the refrigerating agent, **characterised in that** the receptacle (31) is formed as a sealed cartridge (40) produced in a single piece from a plastics material enclosing the conduit (35) whilst leaving free the inlet (37) and the outlet (39) of the latter, the said cartridge (40) having a refrigerating agent filling orifice (42) intended to be closed hermetically by an obturation device (44).

2. Device according to Claim 1, **characterised in that** the cartridge (40) is formed by blow moulding.

3. Device according to Claim 1, **characterised in that** the cartridge (40) is formed by moulding.

4. Device according to one of Claims 1 to 3, **characterised in that** the conduit (35) is formed in a coil produced by blow moulding a plastics material.

5. Device according to one of Claims 1 to 3, **characterised in that** the conduit (35) is formed as a coil produced by moulding a plastics material.

6. Device according to Claim 4 or 5, **characterised in that** the plastics material of the conduit (35) is polypropylene.

7. Device according to any one of the preceding claims, **characterised in that** the conduit (35) has, alternating over its entire length, first portions (51) with the same given cross-section and second portions (53) with the same cross-section but smaller than that of the first portions, the second portions (53) defining contractions intended to slow down the speed of passage of the vapours in the conduit (35).

8. Device according to one of Claims 4 to 7, **characterised in that** the cartridge (40) has a parallelepipedal shape and the coil-shaped conduit (35) lies in a plane parallel to the longitudinal plane (P) of the cartridge (40).

9. Device according to Claim 8, **characterised in that** the inlet (37) and the outlet (39) of the coil-shaped conduit (35) project on the same transverse face (46) of the parallelepipedal cartridge (40).

10. Cooking apparatus, such as for example a deep fryer, having an open casing (3) intended to be closed by a cover (12) during the cooking phase and which is provided at its base with a pedestal (10), a cooking vessel (5) placed in the casing (3), and a tank (18) open in its rear region and mounted so as to be retractable in the pedestal (10) of the casing, **characterised in that** the tank (18) contains at least one device (20) for condensing the cooking vapours as defined according to any one of the preceding claims.

## Patentansprüche

1. Vorrichtung zum Kondensieren von Dämpfen, die von einem Gefäß (5) eines Kochgeräts kommen, das mit einem Deckel (12) versehen ist, der während des Kochvorgangs geschlossen ist, wobei diese Vorrichtung einen Behälter (31) aufweist, der ein Kühlmittel (33) enthält und in dem eine Leitung angeordnet ist, die als Kondensationskanal (35) dient und einen Einlaß (37) für den Zutritt der zu kondensierenden Dämpfe, welche den Behälter (31) durchströmen, und der mit dem Gefäß (5) des Kochgeräts verbunden ist, und einen vom Behälter (31) mündenden Auslaß (39) aufweist, durch den das beim Durchtritt der Dämpfe durch die durch das Kühlmittel gekühlte Leitung erzeugte Kondensationswasser ausströmt, **dadurch gekennzeichnet, daß** der Behälter (31) in Form einer dichten Kassette (40) einstückig aus einem Kunststoff hergestellt ist, der die Leitung (35) umgibt und dabei deren Einlaß (37) und Auslaß (39) freiläßt, wobei die Kassette (40) eine Öffnung (42) zum Füllen mit einem Kühlmittel aufweist, die durch ein Verschlußelement (44) hermetisch verschlossen wird.

2. Vorrichtung nach Anspruch 1, **dadurch gekennzeichnet, daß** die Kassette (40) durch Blasformen gebildet ist.

3. Vorrichtung nach Anspruch 1, **dadurch gekennzeichnet, daß** die Kassette (40) durch Formen geformt ist.

4. Vorrichtung nach einem der Ansprüche 1 bis 3, **dadurch gekennzeichnet, daß** die Leitung (35) in Form einer Schlange durch Blasformen aus einem Kunststoff gebildet ist.

5. Vorrichtung nach einem der Ansprüche 1 bis 3, **dadurch gekennzeichnet, daß** die Leitung (35) in Form einer Schlange durch Formen aus einem Kunststoff hergestellt ist.

6. Vorrichtung nach Anspruch 4 oder 5, **dadurch gekennzeichnet, daß** das Kunststoffmaterial der Leitung (35) Polypropylen ist.

7. Vorrichtung nach einem der vorangehenden Ansprüche, **dadurch gekennzeichnet, daß** die Leitung (35) abwechselnd über ihre ganze Länge erste Abschnitte (51) von gleichem gegebenen Querschnitt und zweite Abschnitte (53) von gleichem jedoch etwas kleinerem Querschnitt als der der ersten Abschnitte aufweist, wobei die zweiten Abschnitte (53) Verengungen definieren, welche dazu bestimmt sind, die Durchtrittsgeschwindigkeit der Dämpfe in der Leitung (35) zu verlangsamen.

8. Vorrichtung nach einem der Ansprüche 4 bis 7, **dadurch gekennzeichnet, daß** die Kassette (40) eine Quaderform aufweist und die schlangenförmige Leitung (35) sich in einer zur Längsebene (P) der Kassette (40) parallelen Ebene erstreckt.

9. Vorrichtung nach Anspruch 8, **dadurch gekennzeichnet, daß** der Einlaß (37) und der Auslaß (39) der schlangenförmigen Leitung (35) von ein und derselben Querfläche (46) der quaderförmigen Kassette (40) vorspringen.

10. Kochgerät wie beispielsweise ein Fritiergerät mit einem offenen Gehäuse (3), das während des Kochvorgangs durch einen Deckel (12) geschlossen ist und an seiner Basis mit einem Sockel (10) versehen ist, einem im Gehäuse (3) angeordneten Kochgefäß (5) und einer Wanne (18), die in ihrem hinteren Bereich offen und im Sockel (10) des Gehäuses abnehmbar montiert ist, **dadurch gekennzeichnet, daß** die Wanne (18) mindestens eine Vorrichtung (20) zum Kondensieren von Kochdämpfen wie in einem der vorangehenden Ansprüche definiert enthält.
